# EUROPÄISCHE PATENTSCHRIFT

(11) **EP 0 561 259 B1**
(45) Veröffentlichungstag und Bekanntmachung des Hinweises auf die Patenterteilung: **19.06.1996**
(21) Anmeldenummer: 93103797.2
(22) Anmeldetag: 10.03.1993
(51) Int. Cl.: A47J 43/046, G01G 23/02, B01F 15/04

(54) **Küchenmaschine mit Wägeeinrichtung**
Food processor with weighing device
Robot ménager avec dispositif de pesage

(30) Priorität: 16.03.1992 DE 4208368
(43) Veröffentlichungstag der Anmeldung: 22.09.1993
(73) Patentinhaber: Braun Aktiengesellschaft, Frankfurt am Main (DE)
(72) Erfinder: Amsel, Klaus, W-6370 Oberursel (DE); Weller, Albrecht, Dr., W-6374 Steinbach (DE); Kötterheinrich, Klaus, W-6052 Mühlheim (DE)

(56) Entgegenhaltungen:
- EP-A- 0 006 237
- DE-A- 3 148 585
- DE-A- 3 308 780
- DE-A- 3 530 169
- FR-A- 2 483 697
- FR-A- 2 651 982
- US-A- 4 726 435

## Beschreibung

Die Erfindung betrifft eine Küchenmaschine mit einem Gerätesockel, mit einem darauf aufsetzbaren Behältnis zum Bearbeiten von Nahrungsmitteln und mit einer ein kraftaufnehmendes Element aufweisenden Wägeeinrichtung, mit der das Gewicht von im Behältnis sich befindlichen Nahrungsmitteln ermittelt und angezeigt werden kann, wobei beim Wiegevorgang das Behältnis vom kraftaufnehmenden Element der Wägeeinrichtung getragen wird, welches seinerseits mit dem Gerätesockel verbunden ist, wobei zwischen dem kraftaufnehmenden Element und dem Behältnis mindestens ein gegen die Kraft einer vorgespannten Feder vertikal verschiebbares Auflageelement ausgebildet ist und wobei das Behältnis beim Wiegen lose auf dem Auflageelement aufliegt.

Eine Küchenmaschine zum Bearbeiten von Nahrungsmitteln ist beispielsweise aus der DE-33 08 780 A1 bekannt. Bei dieser Küchenmaschine besteht die Kraftmeßeinrichtung aus einer Wägeeinrichtung, die mit einem Wiegeteller verbunden ist, auf dem ein mit Zutaten befüllbares Behältnis abstellbar ist. Der Wiegeteller ist mit einer aus einem Hebelgestänge bestehenden Sperreinrichtung verbunden, die, wenn ein Wiegevorgang unternommen werden soll, den Wiegeteller zum Wiegen frei gibt und die, wenn mittels des von oben in das Behältnis eingreifenden Schneebesens Nahrungsmittel verarbeitet werden sollen, den Wiegeteller mit dem Gerätesockel fest arretiert, so daß das Behältnis dann für den folgenden Arbeitsvorgang auf einer festen Unterlage, nämlich dem Wiegeteller, gesichert ist. Bei dieser Küchenmaschine ist es als weniger vorteilhaft anzusehen, daß zur Arretierung des Wiegetellers eine aufwendige Feststellhebeleinrichtung verwendet wird.

Aus der EP-0 396 059 A1 ist eine weitere Küchenmaschine mit einer Wägeeinrichtung bekannt. Die Wägeeinrichtung besteht dabei aus einer zwischen einem Trägerfuß und der kompletten Küchenmaschine ausgebildeten Blattfederlagerung, der Gewichtssensoren zugeordnet sind. Ein Anbieter von Gewichtssensoren zum Einsatz in Blattfeder-Wägeeinrichtungen ist beispielsweise die Firma Revere Corporation of Europe, GmbH, 6382 Friedrichsdorf 2, West-Germany. Im Prospekt "Product Data Bulletin" (Druckvermerk: REV 860502 5M) wird beschrieben, wie ein derartiger Kraftübertragungssensor, beispielsweise das Modell FT50, in der Praxis angewendet wird.

Bei der aus EP-0 396 059 A1 bekannten Wägeeinrichtung ist es als weniger vorteilhaft anzusehen, daß zur Gewichtsmessung der Nahrungsmittel das ganze Gewicht der Küchenmaschine über die Blattfederlagerung auf den Trägerfuß und schließlich auf die Sensoren übertragen werden muß, so daß bei einwirkenden Erschütterungen auf die Küchenmaschine, die durch Eigenschwingungen während des Betriebs oder während des Transportes der Küchenmaschine verursacht werden können, die Wägeeinrichtung leicht beschädigt werden kann; denn derartige Gewichtssensoren reagieren besonders empfindlich gegen unzulässige Überlast, insbesondere dann, wenn ein Vielfaches des maximal zu messenden Gewichts durch hohe Beschleunigung an der Küchenmaschine auftritt. Um diesen Nachteil zu vermeiden, müßte demnach eine besonders robuste und stabile Blattfederlagerung gewählt werden, die auch bei hohen Stoßbelastungen nur geringe Verformungswege vollzieht, damit die Gewichtssensoren nicht beschädigt werden, was allerdings mit einer Verringerung der Empfindlichkeit und damit auch der Genauigkeit der Wägeeinrichtung verbunden ist.

Aus der DE-A-31 48 585 ist schließlich noch eine Küchenmaschine der eingangs beschriebenen Art bekannt, bei der beim Abstellen eines Behältnisses mit der zu wiegenden Zutat auf dem Auflageelement das Gewicht durch ein federndes Auflageelement aufgenommen und auf die Wägeeinrichtung übertragen wird.

Aufgabe der Erfindung ist es nun, eine Küchenmaschine mit einer Wägeeinrichtung zu schaffen, bei der im Betrieb der Küchenmaschine keine Beschädigung an der Wägeeinrichtung eintritt und die dennoch beim Wiegevorgang eine gute Meßgenauigkeit aufweist.

Diese Aufgabe wird durch die Merkmale des Kennzeichens des Anspruchs 1 gelöst. Eine derartige genaue Wägeeinrichtung wird mit Hilfe des gegen die Kraft einer Feder vertikal verschiebbaren Auflageelements besonders einfach realisierbar, ohne daß dabei überdimensionierte Biegebalken verwendet werden müssen. Das von der Dehnungsmeßstreifenanordnung aufgrund des am Biegebalken einwirkenden Gewichts abgegebene elektrische Signal wird dann nach der Erfindung von einer elektronischen Schaltung ausgewertet und beispielsweise über eine elektrisch betreibbare Anzeigeeinrichtung, wie LCD-Anzeige, angezeigt. Durch die Verwendung eines Biegebalkens mit daran befestigten Dehnungsmeßstreifen wird einerseits eine hohe Meßgenauigkeit erzielt. Andererseits sind der Biegebalken und insbesondere die Dehnungsmeßstreifen gegen eine Beschädigung durch Überlast geschützt.

Durch das Verriegeln des Behältnisses auf dem Gerätesockel der Küchenmaschine kann die Kraftmeßeinrichtung außer Funktion gesetzt werden, da die hierbei vom Behälter auf die Kraftmeßeinrichtung abgegebene Kraft größer ist, als das maximal zu messende Gewicht von Nahrungsmitteln. Durch diesen hohen Wert erkennt also die elektronische Schaltung, daß in dem verspannten Zustand des Behältnisses mit dem Gerätesockel kein Wiegen erfolgen soll. Nur dann, wenn das Behältnis lose auf dem Auflageelement aufliegt und dabei Gewichte im Bereich von etwa 1 g bis 3 kg vom Behältnis auf das Auflageelement ausgeübt werden, weiß die elektronische Schalteinrichtung, daß ein Wägevorgang erfolgen soll.

Das Behältnis wird im verriegelten Zustand stets mit Vorspannung gegen die Auflageelemente gedrückt. Als besonders einfach hat sich eine Spanneinrichtung erwiesen, die von einem Bajonettverschluß gebildet wird. Dieser Bajonettverschluß, sowie die gesamte die Wägeeinrichtung enthaltende Küchenmaschine, können beispielsweise so ausgebildet sein, wie die bereits seit langem von der Anmelderin im Handel angebotene Küchenmaschine "Braun-Multipractic-Plus".

Dadurch, daß der Wägebereich der Wägeeinrichtung so gewählt ist, daß beim Wiegen von im Wägebereich liegenden Gewichten an dem Auflageelement noch keine Verschiebung erfolgt, wird nach Aufsetzen des Behältnisses ein Nachschwingen des Auflageelements und somit eine Verzögerung einer stationären Wägeanzeige vermieden. Dazu wird die Vorspannkraft der Feder so groß gewählt, daß bis zu dem maximal zulässigen Wiegegewicht keine elastische Verformung an der Feder eintritt. Erst bei Überlast, also in dem Bereich, für den die Wägeeinrichtung zum Wiegen von Gewichten nicht mehr ausgelegt ist, verschiebt sich dann das Auflagelement, was durch die Veränderung der Federlängen der Feder angezeigt wird. Durch entsprechende Wahl der Steifigkeit der Feder kann die Dämpfung größer oder auch kleiner gewählt werden, je nachdem welches System einer Wägeeinrichtung gewählt wurde. Ein unsachgemäßes Hantieren mit der Wägeeinrichtung, was sich beispielsweise bei einem unsanften Aufsetzen einer Küchenmaschine auf einer Abstellplatte ergibt, führt nicht zu einer Beschädigung der Wägeeinrichtung, da die von dem zu wiegenden Gewicht ausgehenden Massenbeschleunigungen durch das federnde Auflageelement erheblich gedämpft wird und somit keine Überlast an der Wägeeinrichtung auftritt. Wird im ungünstigsten Falle durch eine zu hohe Last ein vorgegebener Weg des Auflageelements überschritten, so kann das Behältnis oder die Auflageelemente nach Überschreiten eines vorgegebenen Weges an einem gehäusefesten Anschlag anschlagen, der eine weitere Kraftbeaufschlagung der Wägeeinrichtung verhindert.

Nach einer anderen Weiterbildung der Erfindung wird vorgeschlagen, daß die elektronische Schaltung derart ausgebildet ist, daß sie entweder oberhalb einer vorgebbaren Überlast kein Gewicht mehr anzeigt oder nach Ablauf einer vorgebbaren Zeitspanne, während der eine Überlast auf die Wägeeinrichtung einwirkt, sich selbst abschaltet. Dies ist insbesondere dann von Vorteil, wenn nach dem Wiegevorgang das Behältnis fest mit dem Gerätesockel verbunden werden soll. Dabei wird das Behältnis so fest gegen den Gerätesockel vorgespannt, daß die dabei auf das Auflageelement ausgeübte Kraft über die maximal zu messende Gewichtskraft hinausgeht, so daß die elektronische Schalteinrichtung erkennt, daß dieser Gewichtswert nicht dem Gewicht von zu messenden Nahrungsmitteln entspricht, sondern, daß diese hohe Auflagekraft dadurch entstanden ist, daß der Behälter gegen den Gerätesockel verriegelt wurde. Die elektronische Schalteinrichtung zeigt infolgedessen keine Gewichtsangabe mehr an, sondern kann nun so geschaltet sein, daß in der Anzeigeeinrichtung "Behälter verriegelt" angezeigt wird, damit eine Bedienungsperson erkennt, daß in dieser Stellung des Behältnisses auf dem Gerätesockel ein Wiegen nicht möglich ist.

Nach einer weiteren Ausgestaltung der Erfindung ist es vorteilhaft, daß das Behältnis von einem Deckel verschließbar ist, daß durch den Deckel eine die Inbetriebnahme der Küchenmaschine verhindernde Sicherheitshalteinrichtung erst dann außer Kraft gesetzt wird, wenn einerseits das Behältnis durch die Spanneinrichtung so auf dem Gerätesockel befestigt ist, daß die Auflageelemente die Überlaststellung einnehmen und wenn andererseits der Deckel in seine ordnungsgemäße Schließstellung gebracht worden ist. Der aufgrund dieser hohen Andrückkraft in der elektronischen Schalteinrichtung auftretende Impuls kann auch als Indiz für den auf dem Gerätesockel gesicherten Arbeitsbehälter verwendet werden. Wird nun noch der Deckel auf dem Arbeitsbehälter ordnungsgemäß verriegelt und wird dabei der elektronischen Schalteinrichtung ein zweites elektrisches Signal zugeführt, so wird erst dann, wenn diese beiden Bedingungen erfüllt sind, der Stromkreis zum Antriebsmotor freigegeben. D.h., auch bei eingeschaltetem Hauptschalter wird der Antriebsmotor nicht in Drehung versetzt, bevor nicht diese beiden Signale die elektronische Schalteinrichtung veranlassen, den Strom zum Antriebsmotor freizugeben. Die Kraftmeßeinrichtung kann somit auch als Sicherheitseinrichtung für eine Küchenmaschine verwendet werden.

Eine weitere vorteilhafte Weiterbildung der Erfindung besteht darin, daß am Biegebalken eine Trageplatte befestigt ist, auf der mindestens drei Auflageelemente mit dazugehöriger Feder verschiebbar gelagert sind. Dies hat den Vorteil, daß zum einen leicht verschiedene Behältnisse auf die Küchenmaschine aufgesetzt werden können und zum anderen diese Behältnisse beim Wägevorgang nicht in einer ansonsten an der Küchenmaschine auszubildenden Führung gehalten werden müssen.

Eine besonders einfache und leicht herzustellende wie leicht montierbare Ausführung der federnden Auflageelemente wird dadurch erreicht, daß jedes Auflageelement die Trageplatte durchdringt und mit der Unterseite der Trageplatte einen Anschlag bildet und daß sich jede Feder mit ihrem einen Ende auf der Oberseite der Trageplatte und mit Ihrem anderen Ende am Auflageelement abstützt. Die federnden Auflageelemente lassen sich so besonders einfach auf der Trageplatte montieren, ohne daß aufwendige Werkzeuge benötigt werden. Gleichzeitig werden die Auflageelemente durch die Federn stets zum Behältnis hin vorgespannt.

Besonders vorteilhaft ist es, wenn die als Dämpfungsglieder ausgebildeten Federn von Spiralfedern gebildet werden. Spiralfedern sind besonders günstig herstellbar, wobei deren Federkennlinie auch in großen Stückzahlen nahezu unverändert eingehalten werden kann. Gleiches gilt auch für Federn, die als Blattfedern ausgebildet sind. Um dabei, wie auch bei den Spiralfedern, die Federkräfte besonders konzentrisch auf jedes Auflageelement einwirken zu lassen, sind die Federn vorteilhafterweise ringförmig ausgebildet.

Um mit der Küchenmaschine auch dann noch Wägevorgänge vornehmen zu können, wenn bereits ein erster Teil an Nahrungsmitteln im Behältnis verarbeitet wurde und wenn diese noch mit Zutaten versehen werden sollen, ist es vorteilhaft, daß die Trageplatte eine Bohrung aufweist, die vom Gerätesockel her durch eine bis in das Behältnis hineinragende Abtriebswelle durchdrungen wird, auf der zum Bearbeiten von Nahrungsmitteln Arbeitswerkzeuge, wie Messer, Knethaken, Raspelscheiben, Schlagbesen etc., ankuppelbar sind.

Dadurch, daß sich das Arbeitswerkzeug während des Wägevorgangs am Behälter und im verriegelten Zustand des Behältnisses an der Abtriebswelle abstützt, wird das Arbeitswerkzeug und insbesondere die am Arbeitswerkzeug anhaftenden Nahrungsmittel beim Wägevorgang stets mitgewogen. Selbstverständlich sollte die Wägeeinrichtung mit einer sogenannten "Tarafunktion" ausgestattet sein, die es erlaubt, das Gewicht von Behältnis und Arbeitswerkzeug zu berücksichtigen und die Anzeige der Wägeeinrichtung vor Beginn des ersten Wiegevorgangs, d.h. bei leerem Behältnis und aufgesetztem Arbeitswerkzeug, auf Null zu setzen.

Ein Ausführungsbeispiel der Erfindung ist in der Zeichnung dargestellt und wird im folgenden näher erläutert. Es zeigen:
- Fig. 1: Teillängsschnitt durch eine von der Anmelderin im Handel seit langem angebotene Vielzweckküchenmaschine, Typ "Multipractic-Plus", die mit der erfindungsgemäßen Kraftmeßeinrichtung nachträglich ausgerüstet wurde,
- Fig. 2: Draufsicht auf die Vielzweckküchenmaschine nach Fig. 1 mit ausschnittsweiser Draufsicht auf die Kraftmeßeinrichtung in Pfeilrichtung X,
- Fig. 3: Teillängsschnitt durch die Wägeeinrichtung gemäß der Schnittführung III-III nach Fig. 2, wobei das Behältnis in Wiegestellung dargestellt ist und
- Fig. 4: Teillängsschnitt durch die Wiegeeinrichtung gemäß der Schnittführung III-III nach Fig. 2, wobei das Behältnis auf dem Gerätesockel, wie in Fig. 1 dargestellt, verspannt, also befestigt ist.

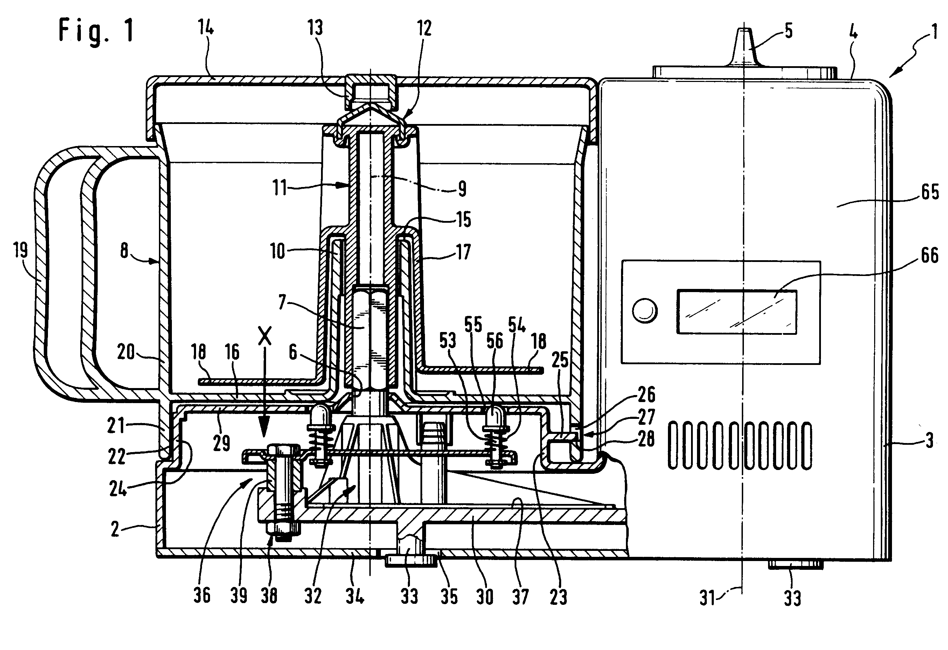

In Fig. 1 besteht die Vielzweckküchenmaschine 1 aus einem Gerätesockel 2, an den sich seitlich das Motorgehäuse 3 mit an seiner Oberseite ausgebildetem Drehschalter 5 anschließt. In dem Motorgehäuse 3 befindet sich ein in Längsrichtung der Mittellinie 31 verlaufender Elektromotor (nicht dargestellt), der über eine Antriebswelle und eine Getriebeanordnung (nicht dargestellt) mit aus dem Gerätesockel 2 nach oben über die Bohrung 6 hinausragender Abtriebswelle 7 verbunden ist. Die Abtriebswelle 7 ist im Querschnitt sechskantförmig ausgebildet und wird, nachdem auf dem Gerätesockel 2 ein Behältnis 8 aufgesetzt ist, von einem am Zentrum 9 des Behältnisses 8 ausgebildeten, rohrförmigen Schaft 10 konzentrisch umgeben.

Auf die Abtriebswelle 7 ist nach Fig. 1 ein Arbeitswerkzeug 11 aufgesetzt, das mit dieser über den Sechskant drehfest in Eingriff steht. Das freie Ende 12 des Arbeitswerkzeuges 11 wird in einer Hülse 13 am anderen Ende zentriert, die Bestandteil eines das Behältnis 8 verschließenden Deckels 14 ist. Vom Arbeitswerkzeug 11 verläuft oberhalb des freien Endes 15 des Schaftes 10 zum Boden 16 des Behältnisses 8 eine rohrförmige Hülse 17, an deren dem Boden 16 näheren Ende sich radial nach außen erstreckende und zum Boden 16 im wesentlichen parallel verlaufende, die Nahrungsmittel behandelnde Rühr- oder Knetarme 18 angeformt sind.

Zur Handhabung des Behältnisses 8 weist dieses nach Fig.1 einen Handgriff 19 auf. In Verlängerung der zylindrischen Wandung 20 schließt sich an den Boden 16 des Behältnisses 8 nach unten ein Zentrierring 21 an, der, wie in Fig. 1 dargestellt, bei auf dem Gerätesockel 2 aufgesetztem Behältnis 8 sich an einer konzentrisch zum Zentrum 9 verlaufenden Ringfläche 22 zentriert. Hierdurch wird das Aufsetzen des Behältnisses 8 auf dem Gerätesockel 2 erleichtert und gleichzeitig wird das Behältnis 8 auf dem Gerätesockel 2 zentriert, so daß die Abtriebswelle 7 im wesentlichen konzentrisch zum Schaft 10 verläuft. Die Ringfläche 22 wird von an der Ringstufe 23 des Gerätesockels 2 hervorstehenden Zentrierstegen 24 gebildet. Versetzt zu den Zentrierstegen 24 stehen an der Ringstufe 23 Vorsprünge 25 hervor, die in am Zentrierring 21 ausgebildete Ausnehmungen 26 eingreifen. Die Vorsprünge 25 bilden mit den Ausnehmungen 26 den Bajonettverschluß 27 zwischen dem Behältnis 8 und dem Gerätesockel 2.

Die an der Unterseite der Ausnehmung 26 ausgebildete Anschlagfläche 28 verläuft nach Fig. 1 konzentrisch zum Zentrum 9 und ist so schräg ausgebildet, daß beim Aufsetzen und anschließenden Verdrehen des Behältnisses 8 auf dem Gerätesockel 2 das Behältnis 8 durch die in die Ausnehmungen 26 eingreifenden Vorsprünge 25 derart zur Oberseite 29 des Gerätesockels 2 hin verschoben und gegenüber dem Gerätesockel 2 verspannt wird, daß das Behältnis 8 spiel frei und fest auf dem Gerätesockel 2 aufsitzt. Der Bajonettverschluß 27 bildet somit die Spanneinrichtung zwischen dem Behältnis 8 und dem Gerätesockel 2.

Nach Fig. 1 ist unterhalb der Oberseite 29 im Gerätesockel 2 eine Grundplatte 30 ausgebildet, die senkrecht zu dem Zentrum 9 und der Mittellinie 31 verläuft und auf der an der einen Seite der im Motorgehäuse 3 befindliche Elektromotor (nicht dargestellt) und auf der anderen Seite die Abtriebswelle 7 über den Lagerbock 32 gelagert bzw. befestigt sind. Die Grundplatte 30 weist Stellfüße 33 auf, die an dem Gerätesockel 2 über an der Unterseite 34 ausgebildete Öffnungen 35 nach außen dringen und als Stützfläche der Vielzweckküchenmaschine 1 auf einer in der Zeichnung nicht dargestellten Abstellfläche, beispielsweise einem Tisch, dienen.

Gemäß den Figuren 1 bis 4 besteht die Wägeeinrichtung 36 aus einem an der Oberseite 37 der Grundplatte 30 mittels einer Mutter-Schrauben-Verbindung 38 befestigten Biegebalken 39, der eine knochenartige Ausnehmung 40 aufweist. Der Biegebalken 39 ist über die Mutter-Schrauben-Verbindung 38 so fest mit der Grundplatte 30 verbunden, daß dies die feste Einspannstelle für den Biegebalken 39 darstellt.

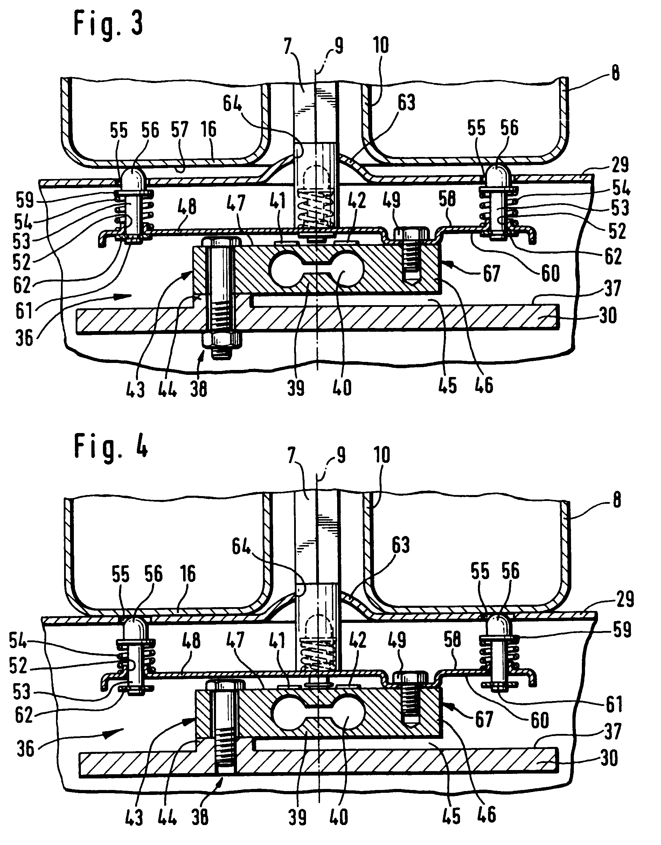

Gemäß den Figuren 3 und 4 sind oberhalb der knochenförmigen Ausnehmung 40, die auch kleeblattähnlich ausgebildet sein kann, Spannungssensoren 41, 42 befestigt, beispielsweise aufgeklebt oder aufgelötet, die über in der Zeichnung nicht dargestellte elektrische Verbindungsleitungen mit einer ebenfalls nicht dargestellten elektronischen Schalteinrichtung verbunden sind. Der hier dargestellte Biegebalken 39 kann beispielsweise so ausgestaltet sein, wie er in dem eingangs beschriebenen Prospekt der Firma Revere dargestellt und von dieser angeboten wird, so daß auf nähere Einzelheiten bezüglich dieses Bauteiles 39 hier nicht weiter eingegangen wird.

Wie aus den Figuren 3 und 4 ersichtlich, ist an der Oberseite 37 der Grundplatte 30 im Bereich der festen Einspannstelle 43 ein Sockel 44 ausgebildet, der dazu dient, daß nur die feste Einspannstelle 43 mit der Grundplatte 30 befestigt ist, während der darüber hinaus sich erstreckende Abschnitt über den so gebildeten Spalt 45 im Abstand zur Oberseite 37 der Grundplatte 30 verläuft, so daß an dem der festen Einspannstelle 43 gegenüberliegenden freien Ende 46 die von oben her auf den Biegebalken 39 einwirkenden Kräfte eine Verformung des Biegebalkens 39 hervorrufen, die dann an den Spannungssensoren 41, 42 eine Spannung hervorrufen, welche der elektronischen Schaltung zugeführt wird.

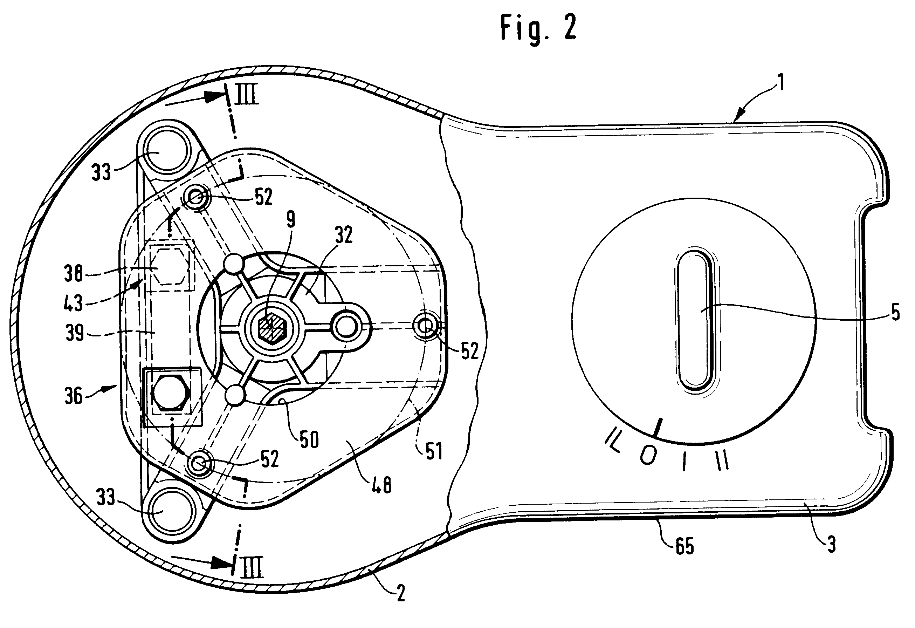

An der Oberseite 47 des freien Endes 46 ist nach den Figuren 3 und 4 eine Trageplatte 48 mittels einer Schraube 49 befestigt. Die Trageplatte 48 erstreckt sich nach Fig. 2 konzentrisch um den Lagerbock 32 herum und wird von diesem über die Bohrung 50 durchdrungen.

Im Winkelabstand von 120° sind auf dem Durchmesser 51 drei Bohrungen 52 ausgebildet, in denen je ein als Zapfen ausgebildetes Auflageelement 53 gegen die Kraft einer Feder 54 axial verschiebbar ist. Die Auflageelemente 53 durchdringen nach den Figuren 1, 3 und 4 die Oberseite 29 über Bohrungen 55 und liegen mit ihrem abgerundeten, kappenförmigen Ende 56 an der Unterseite 57 des Bodens 16 des Behältnisses 8 an, wenn dieses auf den Gerätesockel 2 gemäß den Figuren 1, 3 und 4 aufgesetzt ist.

Nach den Figuren 1, 3 und 4 ist am Auflageelement 53 oberhalb der Trageplatte 48 eine Ringstufe 59 ausgebildet, die als oberer Anschlag für die Feder 54 dient. Als unterer Anschlag für die Feder 54 dient die Oberseite 58 der Trageplatte 48. Die Feder 54 wird von einer Spiralfeder gebildet, die hier als Druckfeder eingesetzt ist, so daß das Auflageelement 53 nach den Figuren 1, 3 und 4 stets nach oben federnd bewegt wird, allerdings nur so weit, bis der unterhalb der Trageplatte 48 in einer Ringnut 61 befestigte Sicherungsring 62 an der Unterseite 60 der Trageplatte 48 anschlägt, wie dies Fig. 3 deutlich zeigt.

In den Figuren 3 und 4 ist zu erkennen, daß die Oberseite 29 des Gerätesokels 2 im Zentrum 9 einen nach oben gewölbten Ringwulst 63 aufweist, der mit seiner Bohrung 64 dichtend an der Oberfläche der Abtriebswelle 7 anliegt; denn in diesem unteren Bereich ist die Abtriebswelle 7 nicht mehr sechskantförmig, sondern kreisförmig zylindrisch ausgebildet.

Zur Vermeidung von Wiederholungen wurden in den Figuren 1 bis 4 für entsprechend gleiche Bauteile gleiche Bezugszeichen verwendet.

Die Wirkungsweise der erfindungsgemäßen Vielzweckküchenmaschine ist folgende:
Sobald die Vielzweckküchenmaschine 1 nach den Figuren 1 bis 4 an eine elektrische Spannungsquelle angeschlossen ist, kann der Wägevorgang bereits beginnen. Wird nämlich das leere Behältnis 8 auf die kappenförmigen Enden 56 aufgesetzt, wie dies die Stellung in Fig. 3 deutlich zeigt, so zeigt die in Fig. 1 an der Seitenfläche 65 ausgebildete Anzeigeeinrichtung 66 Null Gramm an. Die elektronische Schalteinrichtung (nicht dargestellt) ist nämlich so ausgelegt, daß eine Gewichtsanzeige erst dann erfolgt, wenn zusätzlich zum Eigengewicht des Behältnisses 8 weitere Gewichte hinzugefügt werden.

Werden nun in das Behältnis 8 Zutaten eingegeben, so drückt der Boden 16 mit mehr oder weniger Kraft gegen die kappenförmigen Enden 56 der Auflageelemente 53, die sich wiederum über die Stufen 59 an den Spiralfedern 54 abstützen. Von den Spiralfedern 54 wird diese Kraft auf die Trageplatte 48 übertragen, von wo sie über die Einspannstelle 67 an der Schraube 49 in das freie Ende 46 des Biegebalkens 39 eingeleitet wird. Aufgrund dieser außermittig, von der festen Einspannstelle 43 entfernt gelegenen, in die weitere Einspannstelle 67 eingeleiteten Kraft biegt sich das freie Ende 46 des Biegebalkens 39 nach Fig. 3 derart zur Grundplatte 30 hin (Durchbiegung nicht dargestellt), daß an der Oberseite 47 des Biegebalkens 39 eine Oberflächenspannung auftritt, die sich auf die Spannungssensoren 41, 42 derart überträgt, daß dort eine Spannung initiiert wird, die dem elektronischen Schaltkreis zugeführt wird. Dieser wertet dieses Spannungssignal so aus, daß entsprechend der Biegespannung ein entsprechend hoher Gewichtswert an der Anzeigeeinrichtung 66 angezeigt wird.

Da die Federn 54 im eingebauten Zustand (Fig 3.) von den Auflageelementen 53 vorgespannt sind, so wird im Wägevorgang lediglich die Vorspannung der Federn reduziert, d.h., eine Verschiebung der Auflageelemente 53 in Richtung zur Trageplatte 48 erfolgt nicht.

Durch die in der Vielzweckküchenmaschine 1 nachträglich integrierte Wägeeinrichtung 36 können zu jeder Zeit noch Zutaten zugewogen werden, ohne daß das Behältnis 8 von der Vielzweckküchenmaschine 1 abgenommen werden muß, allerdings muß dann, beispielsweise nach einem Bearbeitungsvorgang von Nahrungsmitteln, am Behältnis 8 der Bajonettverschluß 27 zuvor gelöst werden.

Sind alle Zutaten im Behältnis 8 eingewogen, so wird das Behältnis 8 über den Bajonettverschluß 27 mit dem Gerätesockel 2 derart fest verbunden, daß dabei einerseits das Behältnis 8 zur Oberseite 29 des Gerätesockels 2 hin und andererseits auch die kappenförmigen Enden 56 der Auflageelemente 53 zur Trageplatte 48 hin verschoben werden, so wie dies die in den Figuren 1 und 4 dargestellte Endstellung bzw. Bereitschaftsstellung wiedergibt. Dabei werden die Federn 54 derart zusammengedrückt, daß die Sicherungsringe 62 von der Unterseite 60 der Trageplatte 48 nach unten abheben. Durch das Zusammendrücken der Federn 54 wird eine solche Kraft auf die Trageplatte 48 und somit auf den Biegebalken 39 übertragen, daß dieser sich entsprechend verformt, wodurch die Spannungssensoren 41, 42 eine solch große Spannung erzeugen, daß die elektronische Schalteinrichtung erkennt, daß nun das Behältnis 8 fest mit dem Gerätesockel 2 verbunden ist. Somit erfolgt eine Gewichtsanzeige nicht mehr, sondern es kann beispielsweise das Bearbeiten von Nahrungsmitteln an der Anzeigeeinrichtung 66 angezeigt werden. Es kann aber auch angezeigt werden,daß das Behältnis 8 ordnungsgemäß auf dem Gerätesockel 2 aufgesetzt ist.

Ist auch der Deckel 14 ordnungsgemäß auf dem Behältnis 8 aufgesetzt, so daß dieser die Sicherheitsschalteinrichtung betätigt, so können mit der Vielzweckküchenmaschine 1 Nahrungsmittel bearbeitet werden, so wie dies mit den von der Anmelderin unter der Bezeichnung "Braun-Multipractic-Plus" im Handel angebotenen Küchenmaschinen möglich ist.

Sobald nach dem Bearbeiten von Nahrungsmitteln der Deckel 14 vom Behältnis 8 und das Behältnis 8 von dem Gerätesockel 2 durch Verdrehen entgegen dem Uhrzeigersinn von diesem über den Bajonettverschluß 27 (Fig. 1) gelöst wurde, kann das Behältnis 8 vom Gerätesockel 2 nach oben entfernt werden. Dabei verschieben sich die Auflageelemente 53 so weit nach oben, bis sie die in Fig. 3 dargestellte Position eingenommen haben, an der gewogen werden kann.

## Patentansprüche

1. Küchenmaschine (1) mit einem Gerätesockel (2), mit einem darauf aufsetzbaren Behältnis (8) zum Bearbeiten von Nahrungsmitteln und mit einer ein kraftaufnehmendes Element (39) aufweisenden Wägeeinrichtung (36), mit der das Gewicht von im Behältnis (8) sich befindlichen Nahrungsmitteln ermittelt und angezeigt werden kann, wobei beim Wiegevorgang das Behältnis (8) vom kraftaufnehmenden Element (39) der Wägeeinrichtung (36) getragen wird, welches seinerseits mit dem Gerätesockel (2) verbunden ist, wobei zwischen dem kraftaufnehmenden Element (39) und dem Behältnis (8) mindestens ein gegen die Kraft einer vorgespannten Feder (54) vertikal verschiebbares Auflageelement (53) ausgebildet ist und wobei das Behältnis (8) beim Wiegen lose auf dem Auflageelement (53) aufliegt, wobei das kraftaufnehmende Element (39) der Wägeeinrichtung (36) aus einem am Gerätesockel (2) befestigten Biegebalken mit mindestens einem darauf angebrachten Dehnungsmeßstreifen (41, 42) besteht, das Signal des Dehnungsmeßstreifens (41, 42) von einer elektronischen Schaltung ausgewertet und durch eine Anzeigeeinrichtung (66) angezeigt wird,
**dadurch gekennzeichnet**,
daß zum Betrieb der Küchenmaschine (1) das Behältnis (8) mit dem Gerätesockel (2) verriegelbar ist, daß zum Verriegeln des Behältnisses (8) mit dem Gerätesockel (2) die Vorspannung der Feder (54) überwunden werden muß, daß die elektronische Schaltung die Beendigung des Wägevorgangs anzeigt und daß die Verriegelung durch eine zwischen dem Behältnis (8) und dem Gerätesockel (2) ausgebildete Spanneinrichtung (27), beispielsweise einem Bajonettverschluß, aufrechterhalten wird.

2. Küchenmaschine nach Anspruch 1,
**dadurch gekennzeichnet**,
daß der Wägebereich der Wägeeinrichtung so gewählt ist, daß beim Wiegen von im Wägebereich liegenden Gewichten am Auflageelement (53) noch keine Verschiebung erfolgt.

3. Küchenmaschine nach Anspruch 1,
**dadurch gekennzeichnet**,
daß die elektronische Schaltung derart ausgebildet ist, daß sie entweder oberhalb einer vorgebbaren Überlast kein Gewicht mehr anzeigt oder nach Ablauf einer vorgebbaren Zeitspanne, während der eine Überlast auf die Wägeeinrichtung (36) einwirkt, sich selbst abschaltet.

4. Küchenmaschine nach Anspruch 1,
**dadurch gekennzeichnet**,
daß das Behältnis (8) mit einem Deckel (14) verschließbar ist, daß eine die Inbetriebnahme der Küchenmaschine (1) verhindernde Sicherheitshalteinrichtung nur dann außer Kraft gesetzt wird, wenn einerseits das Behältnis (8) mit dem Gerätesockel (2) verriegelt und andererseits der Deckel (14) in seine ordnungsgemäße Schließstellung gebracht worden ist.

5. Küchenmaschine nach Anspruch 1,
**dadurch gekennzeichnet**,
daß am Biegebalken (39) eine Trageplatte (48) befestigt ist, auf der mindestens drei Auflageelemente (53) mit dazugehöriger Feder (54) verschiebbar gelagert sind.

6. Küchenmaschine nach Anspruch 5,
**dadurch gekennzeichnet**,
daß jedes Auflageelement (53) die Trageplatte (48) durchdringt und mit der Unterseite (60) der Trageplatte (48) einen Anschlag bildet und daß sich jede Feder (54) mit ihrem einen Ende auf der Oberseite (58) der Trageplatte (48) und mit ihrem anderen Ende am Auflageelement (53) abstützt.

7. Küchenmaschine nach Anspruch 5,
**dadurch gekennzeichnet**,
daß die Federn (54) von Spiralfedern oder von Blattfedern gebildet werden, wobei letztere auch ringförmig ausgebildet sein können.

8. Küchenmaschine nach Anspruch 7,
**dadurch gekennzeichnet**,
daß die Trageplatte (48) eine Bohrung (50) aufweist, die vom Gerätesockel (2) her durch eine bis in das Behältnis (8) hineinragende Abtriebswelle (7) durchdrungen wird, auf der zum Bearbeiten von Nahrungsmitteln Arbeitswerkzeuge (11), wie Messer, Knethaken, Raspelscheiben, Schlagbesen etc., ankuppelbar sind.

9. Küchenmaschine nach Anspruch 7,
**dadurch gekennzeichnet**,
daß sich die Arbeitswerkzeuge (11) beim Wägevorgang am Behältnis (8) und im verriegelten Zustand des Behältnisses (8) an der Abtriebswelle (7) abstützen.

## Claims

1. A kitchen appliance (1) with an appliance base (2), with a vessel (8) seatable thereon for processing food, and with a weighing device (36) incorporating a force-detecting element (39) and capable of determining and indicating the weight of food contained in the vessel (8), in which the vessel (8) is carried during weighing by the force-detecting element (39) of the weighing device (36) which is in turn connected with the appliance base (2), in which at least one bearing element (53) vertically slidable against the force of a biased spring (54) is provided between the force-detecting element (39) and the vessel (8), the vessel (8) resting on the bearing element (53) during weighing, in which the force-detecting element (39) of the weighing device (36) is comprised of a bending beam fastened to the appliance base (2) and having at least one strain gauge (41, 42) fitted thereto, the signal of the strain gauge (41, 42) being evaluated by an electronic circuitry and indicated on a display device (66),
**characterized in that** the vessel (8) is adapted to be latched with the appliance base (2) for operation of the kitchen appliance (1), that for latching the vessel (8) with the appliance base (2) it is necessary to overcome the bias of the spring (54), that the electronic circuitry indicates the completion of the weighing operation, and that the latching engagement is maintained by a clamping device (27) as, for example, a bayonet connector, which is provided between the vessel (8) and the appliance base (2).

2. The kitchen appliance as claimed in claim 1, **characterized in that** the weighing range of the weighing device is selected such that the bearing element (53) is not displaced as long as weights lying within the weighing range are weighed.

3. The kitchen appliance as claimed in claim 1, **characterized in that** the electronic circuitry is configured such that it either stops indicating a weight above a predeterminable overload or turns itself off after the expiration of a predeterminable time period during which an overload acts on the weighing device (36).

4. The kitchen appliance as claimed in claim 1, **characterized in that** the vessel (8) is adapted to be closed by a lid (14), that a safety interlock system that prevents the kitchen appliance (1) from operating is not disabled until the vessel (8) is latched with the appliance base (2) and until, in addition, the lid (14) is in its proper closing position.

5. The kitchen appliance as claimed in claim 1, **characterized in that** a support plate (48) on which at least three bearing elements (53) with associated springs (54) are slidably mounted is secured to the bending beam (39).

6. The kitchen appliance as claimed in claim 5, **characterized in that** each bearing element (53) extends through the support plate (48), forming with the underside (60) of the support plate (48) a stop, and that each spring (54) bears with its one end against the upper side (58) of the support plate (48) while its other end takes support upon the bearing element (53).

7. The kitchen appliance as claimed in claim 5, **characterized in that** the springs (54) are spiral springs or leaf springs, with the latter being also adapted to be of an annular configuration.

8. The kitchen appliance as claimed in claim 7, **characterized in that** the support plate (48) is provided with a bore (50) through which an output shaft (7) extends from the appliance base (2) up into the vessel (8), with processing tools (11) as blades, dough hooks, shredding disks, whisks, etc. being engageable thereon.

9. The kitchen appliance as claimed in claim 7, **characterized in that** the processing tools (11) bear against the vessel (8) during the weighing operation and against the output shaft (7) when the vessel (8) is in latched condition.

## Revendications

1. Robot de cuisine (1) comportant un socle d'appareil (2) et un récipient (8) susceptible d'être posé sur celui-ci pour traiter des denrées alimentaires, et comportant un dispositif de pesage (36) présentant un élément (39) encaissant la force, grâce auquel le poids des denrées alimentaires situées dans le récipient (8) peut être détecté et indiqué, dans lequel le récipient (8) est porté pendant l'opération de pesage par l'élément (39) du dispositif de pesage (36) encaissant la force, cet élément étant relié à son tour au socle d'appareil (2), dans lequel est réalisé entre l'élément (39) encaissant la force et le récipient (8) au moins un élément de support (53) mobile verticalement à l'encontre de la force d'un ressort précontraint (54), et dans lequel le récipient (8) repose pendant le pesage de façon lâche sur l'élément de support (53), et dans lequel l'élément (39) du dispositif de pesage (36) encaissant la force est constitué par une poutre de flexion fixée sur le socle d'appareil (2) et comportant au moins une jauge de contrainte (41, 42) agencée sur cette poutre, le signal de la jauge de contrainte (41, 42) étant évalué par un circuit électronique et indiqué par un dispositif d'affichage (66), caractérisé en ce que pour le fonctionnement du robot de cuisine (1), le récipient (8) peut être verrouillé sur le socle d'appareil (2), en ce que pour le verrouillage du récipient (8) sur le socle d'appareil (2), la précontrainte du ressort (54) doit être surmontée, en ce que le circuit électronique indique la terminaison de l'opération de pesage, et en ce que le verrouillage est maintenu par un dispositif de serrage (27), par exemple une fermeture à baïonnette, réalisé entre le récipient (8) et le socle d'appareil (2).

2. Robot de cuisine selon la revendication 1, caractérisé en ce que la plage de pesage du dispositif de pesage est choisie de telle sorte que lors du pesage de poids situés dans la plage de pesage, il ne s'effectue pas encore de déplacement au niveau de l'élément de support (53).

3. Robot de cuisine selon la revendication 1, caractérisé en ce que le circuit électronique est réalisé de telle sorte que soit il n'indique plus de poids au-dessus d'une surcharge prédéterminée, soit qu'il s'arrête de lui-même après écoulement d'une durée de temps prédéterminée pendant laquelle une surcharge agit sur le dispositif de pesage (36).

4. Robot de cuisine selon la revendication 1, caractérisé en ce que le récipient (8) peut être refermé par un couvercle (14), en ce qu'un dispositif commutateur de sécurité empêchant la mise en service du robot de cuisine (1) est mis hors de fonction seulement lorsque d'une part le récipient (8) a été verrouillé sur le socle d'appareil (2) et que d'autre part, le couvercle (14) a été amené dans sa position de fermeture correcte.

5. Robot de cuisine selon la revendication 1, caractérisé en ce que sur la poutre de flexion (39) est fixée une plaque de support (48) sur laquelle sont montés en déplacement au moins trois éléments de support (53) comportant un ressort associé (54).

6. Robot de cuisine selon la revendication 5, caractérisé en ce que chaque élément de support (53) traverse la plaque de support (48) et forme une butée avec la face inférieure (60) de la plaque de support (48), et en ce que chaque ressort (54) s'appuie par l'une de ses extrémités contre la face supérieure (58) de la plaque de support (48) et par l'autre extrémité contre l'élément de support (53).

7. Robot de cuisine selon la revendication 5, caractérisé en ce que les ressorts (54) sont formés par des ressorts spiralés ou des ressorts à lame, ces derniers pouvant également être réalisés de façon annulaire.

8. Robot de cuisine selon la revendication 7, caractérisé en ce que la plaque de support (48) présente un perçage (50) qui est traversé depuis le socle d'appareil (2) par un arbre mené (7) pénétrant jusque dans le récipient (8), sur lequel on peut accoupler des outils de travail (11), comme des couteaux, crochets à pétrir, disques à râper, fouets, etc., pour traiter des denrées alimentaires.

9. Robot de cuisine selon la revendication 7, caractérisé en ce que les outils de travail (11) s'appuient de pesage contre le récipient (8) lors de l'opération, et contre l'arbre mené (7) à l'état verrouillé du récipient (8).
